# EUROPÄISCHE PATENTSCHRIFT

(11) **EP 0 681 950 B1**
(45) Veröffentlichungstag und Bekanntmachung des Hinweises auf die Patenterteilung: **22.07.1998**
(21) Anmeldenummer: 95104944.4
(22) Anmeldetag: 03.04.1995
(51) Int. Cl.: B60R 25/02

(54) **Vorrichtung mit einem Wählhebel für Kraftfahrzeug-Automatikgetriebe**
Selector lever device for an automatic transmission for automotive vehicles
Dispositif de levier sélecteur pour une transmission automatique de véhicules automobiles

(30) Priorität: 13.05.1994 DE 4416864
(43) Veröffentlichungstag der Anmeldung: 15.11.1995
(73) Patentinhaber: VALEO GmbH & Co Schliesssysteme KG, 42579 Heiligenhaus (DE)
(72) Erfinder: Schwab, Dittmar, D-63110 Rodgau (DE)
(74) Vertreter: Podszus, Burghart, Dipl.-Phys., Dipl.-Wirtsch.-Ing.

(56) Entgegenhaltungen:
- EP-A- 0 324 469
- EP-A- 0 334 672
- EP-A- 0 519 205
- EP-A- 0 580 970
- DE-A- 3 939 748
- DE-C- 3 905 698
- US-A- 5 050 411
- US-A- 5 085 096

## Beschreibung

Die Erfindung betrifft eine Vorrichtung mit einem um eine Drehachse schwenkbaren Wählhebel für Kraftfahrzeug-Automatikgetriebe, wobei der Wählhebel mit Hilfe eines in seiner Längsrichtung verschiebbaren Sperrhebels arretierbar ist, gemäß den Merkmalen des Oberbegriffs des Anspruchs 1. Eine derartige Anordnung ist allgemein bekannt.

Bei bekannten Kraftfahrzeugen mit Automatikantrieb sind die Wählhebelmechanik und das Zündschloß mit Schließzylinder häufig in dem gleichen Bauträger angeordnet und zur Sicherung des Kraftfahrzeuges gegen Diebstahl über ein Gestänge miteinander verbindbar. Dabei greift nach dem Abschalten des Motors ein Sperrbolzen im Bereich des Schließzylinders in das Gestänge ein und blockiert dadurch den Wählhebel, sofern sich dieser in Parkstellung befindet.

Bei dieser bekannten Diebstahlsicherung kann sich das Sperrgestänge bei Gewaltanwendung leicht verbiegen und somit keinen ausreichenden Diebstahlschutz gewährleisten. Außerdem kann der Sperrhebel auch im verriegelten Zustand des Wählhebels aus dem Arretierteil gezogen werden. Dadurch ist es bei entsprechender Gewaltanwendung häufig möglich, den Wählhebel bei gezogenem Sperrhebel noch so weit zu schwenken,
daß über den Bowdenzug, der den Wählhebel mit dem Getriebe verbindet, letzteres betätigt werden kann.

Aus der DE 39 39 748 C2 ist eine Wählhebelmechanik für sogenannte Tauchdruckschaltungen bekannt, bei denen der gesamte Wählhebel axial verschiebbar angeordnet ist. An dem Wählhebel ist eine Anschlagtasse angeordnet, die in Stellung "P" des Wählhebels von einem Sperrbolzen untergriffen wird, so daß der Wählhebel in dieser Stellung nicht eingedrückt werden kann.

Der Erfindung liegt die Aufgabe zugrunde, eine Vorrichtung der eingangs erwähnten Art anzugeben, die einen gegenüber bekannten Vorrichtungen sichereren Diebstahlschutz gewährleistet, einfach und robust aufgebaut ist und zuverlässig arbeitet.

Diese Aufgabe wird erfindungsgemäß durch die Merkmale des kennzeichnenden Teils des Anspruchs 1 gelöst. Weitere besonders vorteilhafte Ausgestaltungen der Erfindung offenbaren die Unteransprüche.

Die Erfindung beruht zum einen auf dem Gedanken, daß der Sperrbolzen in einem Riegelteil wählhebelseitig angeordnet ist und zur Verriegelung des Wählhebels in eine entsprechende Ausnehmung in dem Wählhebel selbst oder in ein fest mit dem Wählhebel verbundenes Teil, z.B. der Achse, eingreift, so daß es auch bei relativ hoher Gewaltanwendung zu keinem Verbiegen des Sperrgestänges mehr kommen kann. Zum anderen ist wählhebelseitig zusätzlich eine schwenkbare Sperrscheibe mit zwei Zapfen vorgesehen. Dabei stützt sich der eine Zapfen auf dem Sperrbolzen ab, während der zweite Zapfen direkt in den Sperrhebel eingreift und somit verhindert, daß sich der Sperrhebel im verriegelten Zustand des Wählhebels aus dem Arretierteil herausziehen läßt. Dadurch wird sowohl der Wählhebel zusätzlich gesichert als auch eine Betätigung des Getriebes, beispielsweise über einen Bowdenzug, verhindert.

Bei einem ersten besonders vorteilhaften Ausführungsbeispiel wird zur Betätigung des Sperrbolzens durch den Schließzylinder eine Schwenkhebelmechanik verwendet, bei der das eine Ende des Schwenkhebels über eine Steuerleiste oder einen Bowdenzug mit dem Schließzylinder verbunden ist, und bei dem das jeweils andere Ende des Schwenkhebels derart in eine Ausnehmung des Sperrbolzens eingreift, daß eine Drehbewegung des Schwenkhebels zu einer entsprechenden Verschiebung des Sperrbolzens führt. Vorzugsweise wird dabei der Sperrbolzen in Verriegelungsrichtung durch eine Druckfeder vorgespannt, so daß die zur Sicherung des Wählhebels erforderliche Kraft zur Verschiebung des Sperrbolzens bei der Betätigung des Schließzylinders minimal ist.

Bei einem weiteren besonders vorteilhaften Ausführungsbeispiel der Erfindung wird der Sperrbolzen mit dem Schließzylinder über einen Bowdenzug verbunden. Hierzu ist der Bowdenzug schließzylinderseitig an einer mit dem Schließzylinder verbundenen Kurvenscheibe und wählhebelseitig mit dem in Verriegelungsrichtung durch eine Feder vorgespannten Sperrbolzen verbunden.

Um sicherzustellen, daß der Wählhebel noch nicht betätigt werden kann, wenn der Schließzylinder zwar gedreht und somit der Sperrbolzen sich in seinem entsicherten Zustand befindet, das Fahrzeug aber noch nicht gestartet ist, ist bei einer weiteren Ausbildung der Erfindung vorgesehen, einen Hubmagnet mit einem Einrückstift vorzusehen, wobei der Einrückstift direkt in eine Ausnehmung der Sperrscheibe eingreift und damit über den Sperrhebel ebenfalls den Wählhebel blockiert. Sobald das Fahrzeug gestartet wird, zieht der Magnet den Einrückstift aus der Sperrscheibe, so daß anschließend der Sperrhebel gezogen und der Wählhebel aus der Parkstellung verschwenkt werden kann.

Weitere Einzelheiten und Vorteile der Erfindung ergeben sich aus den folgenden anhand von Figuren erläuterten Ausführungsbeispielen. Es zeigen:
- Fig.1: die Seitenansicht eines ersten Ausführungsbeispieles eines die Wählhebelmechanik und das Zündschloß enthaltenden Bauträgers;
- Fig.2: einen Schnitt durch den in Fig.1 dargestellten Bauträger entlang der Linie II-II;
- Fig.3: einen Längsschnitt durch das den Sperrbolzen enthaltende Riegelteil;
- Fig.4: einen Schnitt entlang der in Fig.3 mit IV-IV bezeichneten Linie;
- Fig.5: die Seitenansicht eines zweiten Ausführungsbeispieles, bei dem zwischen Schließzylinder und Sperrbolzen eine Bowdenzugverbindung angeordnet ist;
- Fig.6: einen Schnitt entlang der in Fig.5 mit VI-VI bezeichneten Linie und
- Fig.7: einen teilweisen Längsschnitt durch die Anordnung des zweiten Ausführungsbeispieles im Bereich der Wählhebelmechanik.

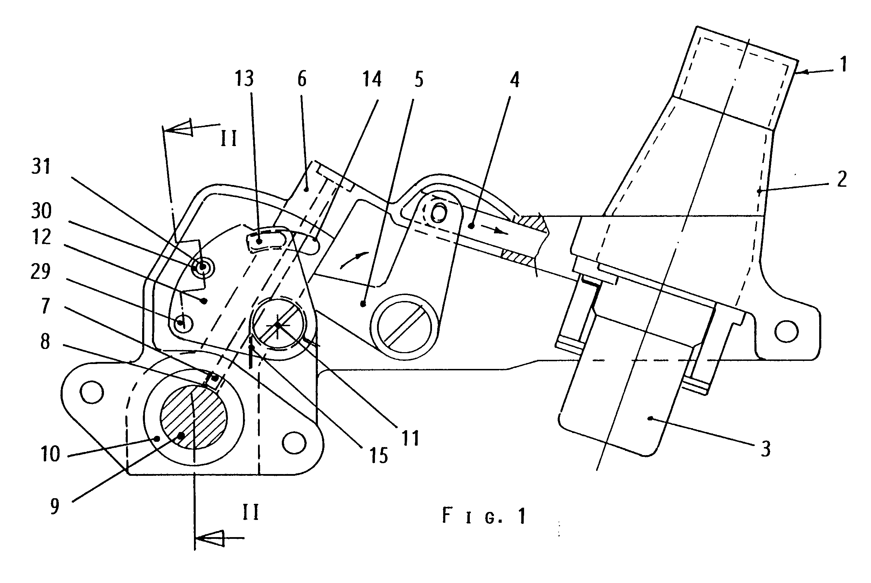

In Fig. 1 ist mit 1 ein Zündschloß bezeichnet, welches einen nur gestrichelt angedeuteten und an sich bekannten Schließzylinder 2 sowie einen Zündschalter 3 umfaßt. Mit dem Schließzylinder 2 ist über eine Steuerleiste 4 und einen Schwenkhebel 5 ein in einem Riegelteil 6 angeordneter Sperrbolzen 7 verbunden. Der Sperrbolzen 7 greift in eine entsprechende nutenförmige Ausnehmung 8 eines auf der Wählhebelachse 9 aufgeschrumpften Mantelrohres 10 ein (verriegelter Zustand des Wählhebels).

Ferner befindet sich im Bereich des Riegelteiles 6 eine um eine Drehachse 11 schwenkbare Sperrscheibe 12, die einen ersten Zapfen 13 aufweist, der in eine in das Riegelteil 6 eingebrachte nutenförmige Ausnehmung 14 eingreift. Durch eine Schenkelfeder 15 wird die Sperrscheibe 12 in einer linken Ausgangsstellung gehalten, bei der der Anschlagszapfen 13 an der linken Seite der Ausnehmung 14 anliegt.

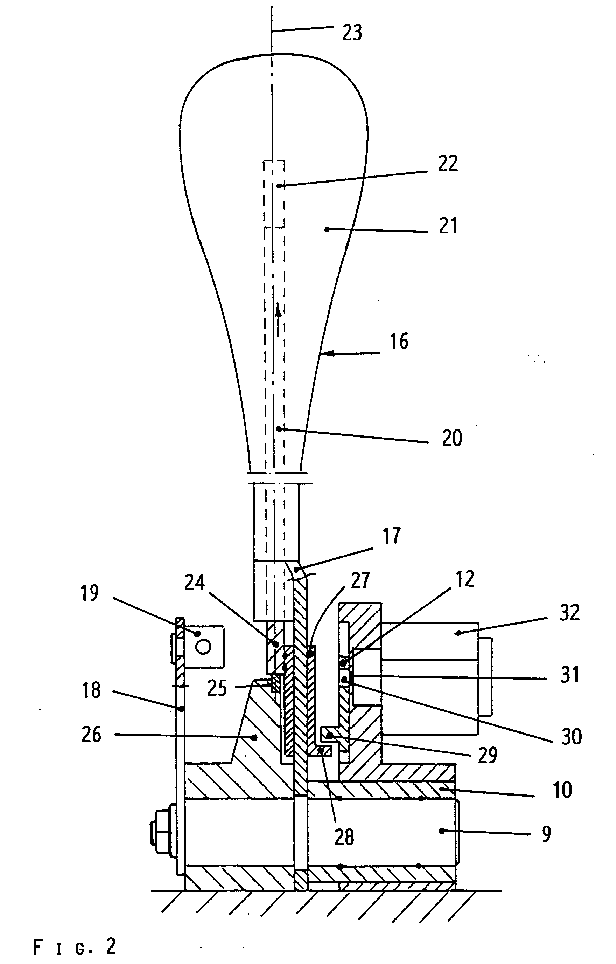

In Fig. 2 ist ein Schnitt entlang der in Fig. 1 mit II-II bezeichneten Linie dargestellt. Dabei ist mit 16 ein Wählhebel bezeichnet, der über ein Profilteil 17 mit der Wählhebelachse 9 fest verbunden ist. Mit der Wählhebelachse 9 ebenfalls fest verbunden ist ein Hebel 18, an dem eine Klemmeinrichtung 19 für einen nicht dargestellten Bowdenzug angeordnet ist. Dieser Bowdenzug bildet in an sich bekannter Weise die Verbindung zwischen dem Wählhebel 16 und dem ebenfalls aus Übersichtlichkeitsgründen nicht dargestellten Getriebe.

Mit 20 ist ein Sperrhebel gekennzeichnet, der im wesentlichen im Inneren des Wählhebels 16 verschiebbar angeordnet ist. An dem oberen Ende 21 des Wählhebels 16 ist der Sperrhebel 20 mit einem griffartigen Teil 22 versehen und auf der dem Betrachter abgewandten Seite für den Fahrer des Kraftfahrzeuges zugänglich. Dadurch kann der Sperrhebel 20 gegen den Druck einer entsprechenden Feder (nicht dargestellt) nach oben in Richtung der Wählhebellängsachse 23 gezogen werden. Am unteren Ende 24 greift der nicht gezogene Sperrhebel 20 in eine nutenförmige Ausnehmung 25 eines Arretierteiles 26 ein und arretiert damit den Wählhebel 16 in der jeweils gewählten Stellung.

Ebenfalls am unteren Ende 24 ist an dem Sperrhebel 20 ein hülsenartiges Teil 27 mit einem Mitnehmer 28 angeordnet. Der Mitnehmer 28 ist formschlüssig mit einem entsprechenden zweiten Zapfen 29 der Sperrscheibe 12 verbunden, so daß beim Anheben des Sperrhebels 20 die Sperrscheibe 12 versucht, um ihre Drehachse 11 zu schwenken, hieran aber durch den gegen den Sperrbolzen 7 drückenden Zapfen 13 gehindert wird (Fig.1).

In der Sperrscheibe 12 ist außerdem eine mit 30 bezeichnete Ausnehmung vorgesehen, in die ein Einrückstift 31 eines Elektromagneten (Hubmagneten) 32 eingreifen kann, dessen Wirkungsweise weiter unten noch näher erläutert wird.

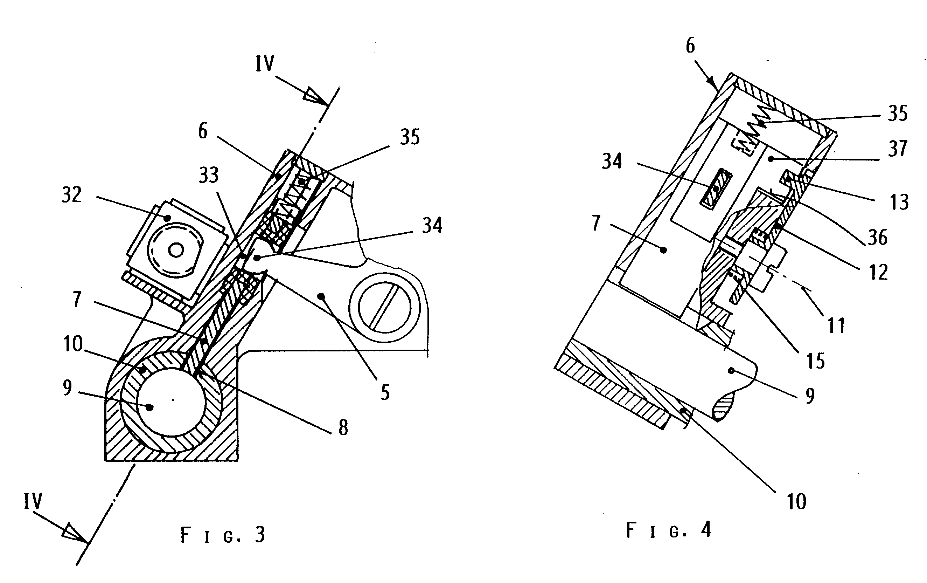

Fig. 3 und 4 zeigen noch einmal einen Längsschnitt durch den in die nutenförmige Ausnehmung 8 des Mantelrohres 10 eingerasteten Sperrbolzen 7. Der Sperrbolzen 7 besitzt in seinem oberen Bereich eine Ausnehmung 33, in die das Ende 34 des Schwenkhebels 5 eingreift. Außerdem ist der Sperrbolzen 7 durch eine Druckfeder 35 in Richtung der Wählhebelachse 9 vorgespannt. Wie Fig.4 zu entnehmen ist, weist der Sperrbolzen 7 an seinem oberen Ende eine Anschlagkante 36 auf, mit der der Sperrbolzen im verriegelten Zustand sich auf einem entsprechenden Teil des Riegelteiles abstützt. Außerdem ist der Sperrbolzen 7 an seinem oberen Ende 37 etwas breiter ausgebildet, so daß im verriegelten Zustand der erste Zapfen 13 der Sperrscheibe 12 in diesem Bereich an dem Sperrbolzen 7 anliegt.

Im folgenden wird auf die Wirkungsweise der in den Fig.1 bis 4 dargestellten erfindungsgemäßen Vorrichtung eingegangen. Dabei wird zunächst die Funktionsweise des Hubmagneten 32 außer Betracht gelassen. Ferner wird angenommen, daß sich der Wählhebel 16 in der dargestellten verriegelten Stellung befindet, und daß das entsprechende Kraftfahrzeug gestartet werden soll:

Nach dem Einstecken eines Zündschlüssels (nicht dargestellt) in das Zündschloß 1 (Fig.1) wird der Zündschlüssel zur Zündung in an sich bekannter Weise nach rechts gedreht. Dabei wird über eine aus Übersichtlichkeitsgründen ebenfalls nicht dargestellte Kurvenscheibe die Steuerleiste 4 in Pfeilrichtung bewegt, so daß der Schwenkhebel 5 nach rechts schwenkt und über sein Ende 34 (Fig.3) den Sperrbolzen 7 gegen den Druck der Feder 35 so lange nach oben bewegt, bis die Anschlagkante 36 des Sperrbolzens 7 sich oberhalb des Anschlagzapfens 13 befindet (Fig.4). Wird anschließend der Sperrhebel 20 (Fig.2) gezogen, so wird über den Mitnehmer 28 und den zweiten Zapfen 29 die Sperrscheibe 12 um die Drehachse 11 (Fig.1) geschwenkt, ohne daß eine Blockierung des ersten Zapfens 13 durch den Sperrbolzen 7 eintritt. (Fig.4). Der Wählhebel 16 kann dann in die gewünschte Position geschwenkt werden.

Soll umgekehrt das Fahrzeug gegen Diebstahl gesichert werden, muß zunächst der Wählhebel in die Parkposition geschwenkt werden. Anschließend wird dann der Zündschlüssel in seine entsprechende Endposition gedreht und damit der Sperrbolzen 7 über die Steuerleiste 4 und den Schwenkhebel 5 in die nutenförmige Ausnehmung 8 des Rohres 10 gedrückt. Wird nun der Zündschlüssel abgezogen, so ist der Wählhebel 16 doppelt gesichert. Zum einen ist ein Schwenken des Wählhebels 16 ausgeschlossen, weil der Sperrbolzen 7 die Wählhebelachse 9 blockiert. Zum anderen kann der Wählhebel 16 nicht geschwenkt werden, weil durch Blockierung der Sperrscheibe 12 mittels des Sperrbolzens 7 der Sperrhebel 20 nicht gezogen werden kann und in dem Arretierteil 26 verharrt.

Sofern -wie z.B. in den USA üblich- sich der Wählhebel 16 erst betätigen lassen darf, wenn das entsprechende Fahrzeug gestartet wurde, wird als zusätzliche Sicherung der mit 32 bezeichnete Hubmagnet verwendet (Fig.1 und 3), dessen Einrückstift 31 so lange in der Ausnehmung 30 der Sperrscheibe 12 verbleibt (Fig.1) und damit den Wählhebel 16 über den Sperrhebel 20 blockiert, bis der Motor tatsächlich gestartet ist.

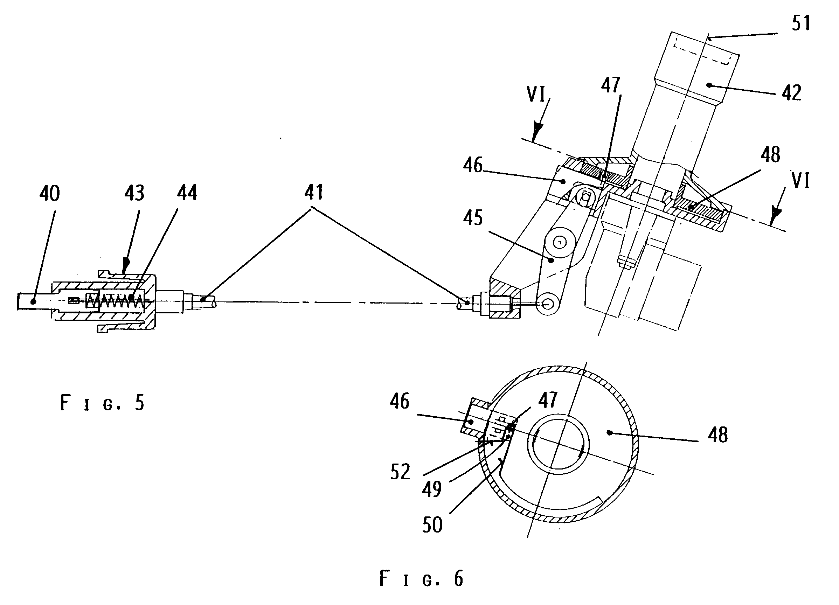

Selbstverständlich ist die Erfindung nicht auf das vorstehend beschriebene Ausführungsbeispiel beschränkt. So zeigt beispielsweise Fig.5 die Möglichkeit, einen federbelasteten Sperrbolzen 40 zur Blockierung des Wählhebels 16 nicht über eine Hebelmechanik, sondern über einen Bowdenzug 41 mit einem entsprechenden Schließzylinder 42 zu verbinden. Dabei ist das Riegelteil, in dem sich der Sperrbolzen 40 befindet, mit 43 bezeichnet. Anders als bei der vorstehend beschriebenen Hebelmechanik ist bei Verwendung des Bowdenzugs 41 eine Druckfeder 44 zur Beaufschlagung des Sperrbolzens zwingend erforderlich, da der Bowdenzug vorteilhafterweise nur zur Übertragung von Zug- und nicht auch von Druckkräften herangezogen werden sollte.

Schließzylinderseitig ist der Bowdenzug 41 über einen Umlenkhebel 45 mit einem Schieber 46 verbunden, der einen Zapfen 47 aufweist. Der Zapfen 47 (und damit auch der Schieber 46) wird durch eine an dem Schließzylinder 42 angeordnete Kurvenscheibe 48 geführt.

Fig.6 zeigt eine Draufsicht auf die Kurvenscheibe 48. Diese ist vorteilhafterweise derart ausgebildet, daß bei Bewegung des Zündschlüssels nach rechts (Zündung des Motors; Entriegelung des Wählhebels) der Zapfen 47 sich aus einer nutenförmigen Ausnehmung 49 auf einer Auflaufschräge 50 relativ schnell nach außen bewegt und dann bei weiterer Drehung des Zündschlüssels in einem konstanten Abstand zur Mittelachse 51 des Schließzylinders verbleibt. Der Umlenkhebel 45 sorgt dann dafür, daß der Bowdenzug 41 gegen den Druck der Feder 44 den Sperrbolzen 40 aus der entsprechenden Nut 8 des mit der Wählhebelachse 9 verbundenen Mantelrohres 10 (Fig.2) zieht.

Beim Verriegeln des Wählhebels 16 wird über die Druckfeder 44 des Riegelteiles 43 der Sperrbolzen 40 nach vorne geschoben und rastet in die Nut 8 des Mantelrohres 10 ein.

Befindet sich der Wählhebel 16 nicht in der Parkstellung, kann der Sperrbolzen 40 nicht in die Nut 8 einrasten. In diesem Fall kann der Schließzylinder 1 auch nicht in seine Endstellung gedreht werden, da der Zapfen 47 nicht in die nutenförmige Ausnehmung 49 zurückläuft, sondern an einem Vorsprung 52 der Kurvenscheibe 48 anschlägt. Der Zündschlüssel läßt sich in diesem Fall nicht aus dem Zündschloß ziehen. Vielmehr muß vorher der Wählhebel 16 in die Parkstellung gebracht werden.

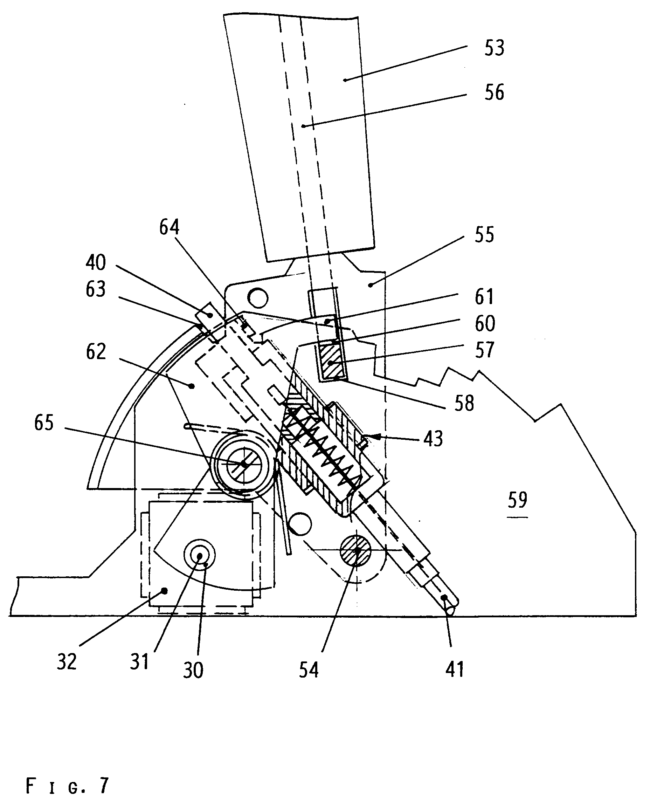

Durch die Verwendung des Bowdenzuges 41 können wählhebel- und schließzylinderseitiger Teil der erfindungsgemäßen Vorrichtung weitgehend räumlich beliebig zueinander zugeordnet werden. So gibt Fig.7 ein Ausführungsbeispiel wieder, bei dem das Riegelteil derart angeordnet ist, daß der Sperrbolzen -anders als im Falle des in den Fig.1-4 dargestellten Ausführungsbeispieles- nicht von oben in die Wählhebelachse, sondern von unten in eine mit dem Wählhebel verbundene und um die Wählhebelachse schwenkbare plattenförmige Verlängerung eingreift.

Dabei ist in Fig.7 mit 53 der Wählhebel bezeichnet, an dem die um die Wählhebelachse 54 schwenkbare plattenförmige Verlängerung 55 befestigt ist. In dem Wählhebel 53 ist wiederum ein Sperrhebel 56 verschiebbar gelagert, dessen unteres Ende 57 in der dargestellten Parkstellung in eine nutenförmige Ausnehmung 58 eines Lagergehäuses 59 eingreift. Der Sperrhebel 56 weist ebenfalls an seinem unteren Ende 57 eine Ausnehmung 60 auf, in die ein Zapfen 61 der mit 62 bezeichneten Sperrscheibe eingreift.

Das an dem Lagergehäuse 59 befestigte Riegelteil ist wiederum mit 43, der Bowdenzug mit 41 und der Sperrbolzen mit 40 bezeichnet (vgl. auch Fig.5). Der Sperrbolzen 40 greift in der -in Fig.7 dargestellten- verriegelten Stellung in eine Ausnehmung 63 der plattenförmigen Verlängerung 55 ein, so daß sich der Wählhebel 53 nicht mehr um die Wählhebelachse 54 schwenken läßt. Außerdem weist die Sperrscheibe 62 auf der dem Betrachter abgewandten Seite ein Anschlagteil 64 auf, welches an dem Sperrbolzen 40 anliegt und ein Schwenken der Sperrscheibe 62 um die Drehachse 65 verhindert, so daß auch der Sperrhebel 56 nicht gezogen werden kann.

Wird durch Drehung des Schließzylinders 42 (Fig.5) der Sperrbolzen 40 in seine unverriegelte Stellung gebracht, so wird der Sperrbolzen 40 durch den Bowdenzug 41 so weit zurückgezogen, daß seine Vorderkante nicht mehr das Anschlagteil 64 berührt und somit die Sperrscheibe 62 beim Ziehen des Sperrhebels 56 um ihre Drehachse 65 schwenken kann.

Mit dem Bezugszeichen 32 ist wiederum ein Hubmagnet bezeichnet, dessen Einrückstift 31 in eine entsprechende Ausnehmung 30 eingreift (vgl. auch Fig.2).

### Bezugszeichenliste

- 1: Zündschloß
- 2: Schließzylinder
- 3: Zündschalter
- 4: Steuerleiste
- 5: Schwenkhebel
- 6: Riegelteil
- 7: Sperrbolzen
- 8: nutenförmige Ausnehmung
- 9: Wählhebelachse
- 10: Mantelrohr
- 11: Drehachse
- 12: Sperrscheibe
- 13: erste Zapfen
- 14: nutenförmige Ausnehmung
- 15: Feder
- 16: Wählhebel
- 17: Profilteil
- 18: Hebel
- 19: Klemmeinrichtung
- 20: Sperrhebel
- 21: oberes Ende des Wählhebels
- 22: griffartiges Teil
- 23: Längsachse
- 24: unteres Ende des Sperrhebels
- 25: nutenförmige Ausnehmung
- 26: Arretierteil
- 27: Hülse
- 28: Mitnehmer
- 29: zweite Zapfen
- 30: Ausnehmung
- 31: Einrückstift
- 32: Elektromagnet, Hubmagnet
- 33: Ausnehmung
- 34: Ende des Schwenkhebels
- 35: Druckfeder
- 36: Anschlagkante
- 37: oberes Ende des Sperrbolzens
- 40: Sperrbolzen
- 41: Bowdenzug
- 42: Schließzylinder
- 43: Riegelteil
- 44: Druckfeder
- 45: Umlenkhebel
- 46: Schieber
- 47: Zapfen
- 48: Kurvenscheibe
- 49: nutenförmige Ausnehmung
- 50: Auflaufschräge
- 51: Mittelachse
- 52: Vorsprung
- 53: Wählhebel
- 54: Wählhebelachse
- 55: plattenförmige Verlängerung
- 56: Sperrhebel
- 57: unteres Ende des Sperrhebels
- 58: Ausnehmung
- 59: Lagergehäuse
- 60: Ausnehmung
- 61: Zapfen
- 62: Sperrscheibe
- 63: Ausnehmung
- 64: Anschlagteil
- 65: Drehachse

## Patentansprüche

1. Vorrichtung mit einem um eine Drehachse schwenkbaren Wählhebel (16;53) für Kraftfahrzeug-Automatikgetriebe, wobei
a) der Wählhebel (16;53) mittels eines in seiner Längsachse (23) verschiebbaren Sperrhebels (20;56) arretierbar ist, und
b) zur Verriegelung des Wählhebels (16;53) ein mit einem Schließzylinder (2;42) des Zündschlosses (1) verbundener Sperrbolzen (7;40) vorgesehen ist,
c) der Sperrbolzen (7;40) wählhebelseitig in einem Riegelteil (6;43) angeordnet ist,
**dadurch gekennzeichnet**, daß
d) der Sperrbolzen (7;40) zur Verriegelung des Wählhebels (16;53) in eine entsprechende Ausnehmung des Wählhebels (16;53) selbst oder in eine Ausnehmung (8;63) eines mit dem Wählhebel (16;53) fest verbundenen Teiles (10;55) eingreift,
e) wählhebelseitig eine schwenkbare Sperrscheibe (12;62) mit zwei Zapfen (13,29;61,64) vorgesehen ist und
f) sich im verriegelten Zustand des Wählhebels (16;53) der eine Zapfen (13;64) auf dem Sperrbolzen (7;40) abstützt, während der zweite Zapfen (29;61) direkt in den Sperrhebel (20) eingreift und verhindert, daß sich der Sperrhebel (20) aus einem Arretierteil (26) herausziehen läßt.

2. Vorrichtung nach Anspruch 1, **dadurch gekennzeichnet**, daß der Sperrbolzen (7) mit dem Schließzylinder (2) über eine Schwenkhebelmechanik verbunden ist, wobei das eine Ende eines Schwenkhebels (5) über eine Steuerleiste (4) oder einen Bowdenzug mit dem Schließzylinder (2) in Wirkverbindung steht, und daß das andere Ende (34) des Schwenkhebels (5) derart in eine Ausnehmung (33) des Sperrbolzens (7) eingreift, daß eine Drehbewegung des Schwenkhebels (5) zu einer entsprechenden Verschiebung des Sperrbolzens (7) führt.

3. Vorrichtung nach Anspruch 1 oder 2, **dadurch gekennzeichnet**, daß der Sperrbolzen (7) in Verriegelungsrichtung durch eine Druckfeder (35) vorgespannt ist.

4. Vorrichtung nach Anspruch 1, **dadurch gekennzeichnet**, daß der Sperrbolzen (40) in Verriegelungsrichtung durch eine Druckfeder (44) vorgespannt ist und über einen Bowdenzug (41) mit dem Schließzylinder (42) in Wirkverbindung steht, daß das schließzylinderseitige Ende des Bowdenzuges (41) über einen Umlenkhebel (45) mit einem durch eine Kurvenscheibe (48) geführten Schieber (46) verbunden ist, und daß die Kurvenscheibe (48) mit dem Schließzylinder (42) in Verbindung steht.

5. Vorrichtung nach Anspruch 4, **dadurch gekennzeichnet**, daß die Kurvenscheibe (48) derart gewählt ist, daß sich ein den Schieber (46) führender Zapfen (47) aus einer nutenförmigen Ausnehmung (49) auf einer Auflaufschräge (50) relativ schnell nach außen bewegt, daß dann bei weiterer Bewegung des Zapfens (47) dieser in einem konstanten Abstand zur Mittelachse (51) des Schließzylinders (42) verbleibt, und daß auf der der Mittelachse (51) abgewandten Seite der Kurvenscheibe (48) die nutenförmige Ausnehmung (49) einen Vorsprung (52) aufweist (Fig.6).

6. Vorrichtung nach einem der Ansprüche 1 bis 5, **dadurch gekennzeichnet**, daß das untere Ende (24) des Sperrhebels (20) mit einer einen Mitnehmer (28) aufweisenden Hülse (27) verbunden ist, die durch den Wählhebel (16) geführt wird, und daß der Mitnehmer (28) derart in Verbindung mit dem zweiten Zapfen (29) der Sperrscheibe (12) steht, daß im entriegelten Zustand des Wählhebels (16) ein Heben des Sperrhebels (20) eine Schwenkbewegung der Sperrscheibe (12) bewirkt.

7. Vorrichtung nach einem der Ansprüche 1 bis 6, **dadurch gekennzeichnet**, daß der Sperrbolzen (7;40) zur Verriegelung des Wählhebels (16;53) in die Wählhebelachse (9) bzw. in ein entsprechendes Mantelrohr (10) der Wählhebelachse oder in eine plattenförmige Verlängerung (55) des Wählhebels eingreift.

8. Vorrichtung nach einem der Ansprüche 1 bis 7, **dadurch gekennzeichnet**, daß wählhebelseitig ein Elektromagnet (32) mit einem Einrückstift (31) vorgesehen ist, der direkt in eine entsprechende Ausnehmung (30) der Sperrscheibe (12) eingreift und aus dieser durch den Magneten (32) erst nach dem Starten des Fahrzeuges herausziehbar ist.

## Claims

1. A device having a selector lever (16; 53) for automotive automatic transmissions which can swivel around an axis of rotation, wherein
a) the selector lever (16; 53) can be arrested by means of a catch lever (20; 56) displaceable in its longitudinal axis (23), and
b) to lock the selector lever (16; 53) a locking pin (7; 40) connected to a closing cylinder (2; 42) of the ignition lock (1) is provided,
c) the locking pin (7; 40) is disposed on the side of the selector lever in a bolt part (6; 43),
**characterised in that**
d) to lock the selector lever (16; 53) the locking pin (7; 40) engages in a corresponding recess of the selector lever (16; 53) itself or in a recess (8; 63) of a part (10; 55) securely connected to the selector lever (16; 53),
e) on the side of the selector lever a swivelling locking plate (12; 62) having two spigots (13, 29; 61, 64) is provided and
f) in the locked state of the selector lever (16; 53), the one spigot (13; 64) is supported on the locking pin (7; 40), while the second spigot (29; 61) engages directly in the catch lever (20) and prevents the catch lever (20) being withdrawn from a retention part (26).

2. A device according to Claim 1,
**characterised in that** the locking pin (7) is connected to the closing cylinder (2) via a swivel lever mechanism, with the one end of a swivel lever (5) being in effective communication with the locking cylinder (2) via a control rail (4) or a Bowden cable,
**and in that** the other end (34) of the swivel lever (5) engages in a recess (33) of the locking pin (7) in such a manner that a rotational movement of the swivel lever (5) results in a corresponding displacement of the locking pin (7).

3. A device according to Claim 1 or 2,
**characterised in that** the locking pin (7) is biased in the locking direction by a pressure spring (35).

4. A device according to Claim 1,
**characterised in that** in the locking direction the locking pin (40) is biased by a pressure spring (44) and is in effective communication with the closing cylinder (42) via a Bowden cable (41),
**in that** the end of the Bowden cable (41) on the side of the closing cylinder is connected via a reversing lever (45) with a slide (46) guided by a cam plate (48), **and in that** the cam plate (48) communicates with the closing cylinder (42).

5. A device according to Claim 4,
**characterised in that** the cam plate (48) is selected in such a manner that a spigot (47) guiding the slide (46) moves outwardly relatively quickly out of a groove-shaped recess (49) on a leading slope (50),
**in that** with a further movement of the spigot (47) this remains at a constant distance from the centre axis (51) of the closing cylinder (42),
**and in that** on the side of the cam plate (48) faced away from the centre axis (51) the groove-shaped recess (49) has a projection (52) (Figure 6).

6. A device according to one of Claims 1 to 5,
**characterised in that** the lower end (24) of the catch lever (20) is connected to a sleeve (27), having a catch (28), which is passed through the selector lever (16),
**and in that** the catch (28) is in communication with the second spigot (29) of the locking plate (12) in such a manner that in the unlocked state of the selector lever (16) a raising of the catch lever (20) effects a swivel movement of the locking plate (12).

7. A device according to one of Claims 1 to 6,
**characterised in that** the locking pin (7; 40) for locking the selector lever (16; 53) engages in the selector lever arbour (9) or in a corresponding jacket (10) of the selector lever arbour or in a plate-shaped extension (55) of the selector lever.

8. A device according to one of Claims 1 to 7,
**characterised in that** on the side of the selector lever an electromagnet (32) having an engaging pin (31) is provided, which engages directly in a corresponding recess (30) of the locking plate (12) and can be withdrawn therefrom by the magnet (32) only after the vehicle has started up.

## Revendications

1. Dispositif comportant un levier sélecteur (16 ; 53), propre à pivoter autour d'un axe de rotation, pour des transmissions automatiques de véhicules automobiles, dans lequel
a) le levier sélecteur (16 ; 53) peut être immobilisé au moyen d'un levier de blocage (20 ; 56), mobile selon son axe longitudinal (23), et
b) dans lequel il est prévu, pour le verrouillage du levier sélecteur (16 ; 53), un boulon de verrouillage (7 ; 40) relié à un cylindre de fermeture (2 ; 42) de la serrure de contact (1),
c) le boulon de verrouillage (7 ; 40) est disposé, du côté levier sélecteur, dans une partie verrou (6 ; 43),
caractérisé en ce que
d) pour le verrouillage du levier sélecteur (16 ; 53), le boulon de verrouillage (7 ; 40) pénètre dans un évidement correspondant du levier sélecteur (16 ; 53) lui-même ou dans un évidement (8 ; 63) d'un élément (10 ; 55) rigidement relié au levier sélecteur (16 ; 53),
e) il est prévu, du côté levier sélecteur, un disque pivotant de blocage (12 ; 62) comportant deux ergots (13, 29 ; 61, 64), et
f) en ce que, à l'état verrouillé du levier sélecteur (16 ; 53), un ergot (13 ; 64) s'appuie sur le boulon de verrouillage (7 ; 40), tandis que le second ergot (29 ; 61) entre directement dans le levier de blocage (20) et empêche ainsi que le levier de blocage (20) ne puisse être extrait d'une pièce d'arrêt (26).

2. Dispositif selon la revendication 1, caractérisé en ce que le boulon de verrouillage (7) est relié au cylindre de fermeture (2) par l'intermédiaire d'un mécanisme à levier pivotant, dans lequel une extrémité d'un levier pivotant (5) est reliée en fonctionnement, par l'intermédiaire d'une tige de commande (4) ou d'un câble Bowden, au cylindre de fermeture (2), et dans lequel l'autre extrémité (34) du levier pivotant (5) pénètre de telle manière dans un évidement (33) du boulon de verrouillage (7), qu'un mouvement de rotation du levier pivotant (5) entraîne une translation correspondante du boulon de verrouillage (7).

3. Dispositif selon la revendication 1 ou 2, caractérisé en ce que le boulon de verrouillage (7) est précontraint par un ressort de pression (35) dans le sens du verrouillage.

4. Dispositif selon la revendication 1, caractérisé en ce que le boulon de verrouillage (40) est précontraint par un ressort de pression (44) dans le sens du verrouillage, et est relié en fonctionnement, par l'intermédiaire d'un câble Bowden (41), au cylindre de fermeture (42), en ce que l'extrémité, du côté cylindre de fermeture, du câble Bowden (41) est reliée, par l'intermédiaire d'un levier de renvoi (45), à un baladeur (46) guidé par un disque à came (48), et en ce que le disque à came (48) est relié au cylindre de fermeture (42).

5. Dispositif selon la revendication 4, caractérisé en ce que le disque à came (48) est conçu de telle manière qu'un ergot (47), guidant le baladeur (46), sorte d'un évidement (49) en forme de rainure pour se déplacer relativement vite vers l'extérieur sur une surface oblique (50), en ce qu'ensuite, lors de la poursuite du mouvement de l'ergot (47), celui-ci demeure à une distance constante par rapport à l'axe médian (51) du cylindre de fermeture (42), et en ce que l'évidement (49) en forme de rainure, situé sur le côté, dirigé à l'opposé de l'axe médian (51), du disque à came (48) présente une saillie (52) (figure 6).

6. Dispositif selon l'une des revendications 1 à 5, caractérisé en ce que l'extrémité inférieure (24) du levier de blocage (20) est reliée à une douille (27) présentant un entraîneur (28) et qui est guidée au moyen du levier sélecteur (16), et en ce que l'entraîneur (28) est associé au second ergot (29) du disque de blocage (12) de telle manière que, à l'état déverrouillé du levier sélecteur (16), une montée du levier de blocage (20) entraîne un mouvement pivotant du disque de blocage (12).

7. Dispositif selon l'une des revendications 1 à 6, caractérisé en ce que, pour le verrouillage du levier sélecteur (16 ; 53), le boulon de verrouillage (7 ; 40) pénètre dans l'axe (9) du levier sélecteur, ou bien dans un tube de protection (10) de l'axe du levier sélecteur ou dans un prolongement (55) en forme de plaque du levier sélecteur.

8. Dispositif selon l'une des revendications 1 à 7, caractérisé en ce qu'il est prévu, du côté levier sélecteur, un électroaimant (32) avec une tige d'embrayage (31), qui pénètre directement dans un évidement (30) correspondant du disque de blocage (12) et qui ne peut être extraite de cet évidement par l'aimant (32) qu'après la mise en marche du véhicule.
